# EUROPÄISCHE PATENTANMELDUNG

(11) **EP 1 748 376 A1**
(43) Veröffentlichungstag der Anmeldung: **31.01.2007**
(21) Anmeldenummer: 06014018.3
(22) Anmeldetag: 06.07.2006
(51) Int. Cl.: G06K 7/08

(54) **Verpackungsbehältnis mit Transponder**

(30) Priorität: 23.07.2005 DE 102005034472
(71) Anmelder: Clemens Brüntrup Offset-Reproduktion GmbH, 42283 Wuppertal (DE)
(72) Erfinder: Brüntrup, Alexander, D-42283 Wuppertal (DE)
(74) Vertreter: Riebling, Peter

(57) **Zusammenfassung**

Die Erfindung betrifft ein Verpackungsbehältnis mit Transponder, zur Aufnahme von elektromagnetische Strahlung abschirmenden Gegenständen, und mit einer mit dem Transponder elektrisch leitend verbundenen Sende- und Empfangsantenne zur Datenübertragung und ggfs. auch zur Energieübertragung, wobei der Transponder mit mindestens einer weiteren Sende-/Empfangsantenne elektrisch leitend verbunden ist, und die Sende-/Empfangsantennen derart an/in dem Verpackungsbehältnis angeordnet sind, dass bei Stapelung einer Vielzahl derartiger Verpackungsbehältnisse innerhalb einer 2D- oder 3D-Stapelmatrix mit horizontalen Zeilen und vertikalen Spalten, sich mindestens je eine Sende-/Empfangsantenne benachbarter Verpackungsbehältnisse zur Datenübertragung und ggfs. Energieübertragung von Transponder zu Transponder innerhalb der horizontalen Zeilen und/oder der vertikalen Spalten und/oder diagonal zu diesen, gegenüberliegen. Die Erfindung betrifft weiterhin ein Verfahren zum Identifizieren, d.h. zum Auslesen/Einschreiben von Identifizierungsdaten mittels eines mit elektromagnetischer Strahlung arbeitendenden kontaktlosen Lese-/Schreibgerätes, von in einem 2D/3D-Matrixstapel einer Vielzahl von Verpackungsbehältnissen befindlichen einzelnen Verpackungsbehältnis , beinhaltend mindestens einen Transponder mit mindestens einer Sende-/Empfangsantenne, wobei beim Auslesen das zu identifizierende Verpackungsbehältnis seine Identifizierungsdaten an das Lese-/Schreibgerät über eine Kette von Sende-/Empfangsantennen anderer Verpackungsbehältnisse sendet, welche zwischen dem zu identifizierenden Verpackungsbehältnis und dem Lese-/Schreibgerät liegen. Vorteil dabei ist, dass es damit erstmals möglich ist, auch Daten aus Transpondern auszulesen, die sich auf Verpackungsbehältnissen innerhalb einer 2D- oder 3D-Stapelmatrix befinden, ohne dass dabei metallische Verpackungs- und/oder Produktbestandteile die Datenübertragung stören.

## Beschreibung

Die Erfindung betrifft ein Verpackungsbehältnis mit Transponder zur Aufnahme von elektromagnetische Strahlung abschirmenden Gegenständen nach dem Oberbegriff des Patentanspruchs 1, insbesondere Umverpackungen (Verkaufsverpackungen) für mehrere, mit Alufoliensiegel abgedichtete Kunststoff-Blisterstreifen zur Aufnahme einer Vielzahl von Medikamententabletten. Auch betrifft die Erfindung ein Identifikationsverfahren von gestapelten Verpackungsbehältnissen nach dem Oberbegriff des Patentanspruchs 12, wobei die Verpackungsbehältnisse insbesondere nach Patentanspruch 1 ausgebildet sind.

Derartige kontaktlose Transponder sind beispielsweise in der DE 690 34 050 T2 offenbart, wobei der Transponder in Etikettenform auf einer zu markierenden Ware aufgebracht ist und einen Mikrochip enthält, der von einer spiralförmigen Antenne in der Ebene des Etiketts umgeben ist. Auch die DE 20013622 U1 und die DE 19951378 A1 offenbaren derartige kontaktlose Transponder in Etikettenform.

Verstärker für derartige kontaktlose Transponder sind in der EP1378993 A2 und in der US 6,516,182 B1 allgemein offenbart.

Die US 6,557,758 B1 offenbart ein mit einem passiven Transponder (ohne eigene Energiequelle) ausgestattetes Produkt, welches in einer Umverpackung geschützt vor Beschädigung und Manipulation aufgenommen ist. In dem Transponder werden Fracht- und Transportdaten gespeichert, so dass diese nicht auf der Umverpackung aufgebracht werden müssen, sondern nur die lesbare Adresse selbst. Die Fracht- und Transportdaten können dann von einem Lesegerät aus dem Innenraum der Umverpackung kontaktlos ausgelesen werden.

Die DE 69813353 T2 offenbart einen Behälter in Form eines Wellkartons, in dessen eingedrückter Vertiefung auf der Außenseite ein Transponder-Chip eingeklebt ist.

Die DE 4313049 C2 offenbart einen Transportbehälter insbesondere für pharmazeutische Zwecke mit einem freiprogrammierbaren Lese-/Schreib-Transponder in der Randaufnahmeleiste des Transportbehälters. Mehrere Transportbehälter sind ineinander stapelbar derart, dass sich die Transponder nicht gegenseitig beim Lese-/Schreibvorgang stören.

Die DE 19739438 A1 offenbart eine Verpackung für formfeste Medikamentenproben in Form eines Blisterstreifens, in dem neben den Medikamentenproben auch ein Signalgeber und eine Auswerteschaltung in Chipform, sowie eine Batterie eingeschweißt sind, um den Patienten an die Medikamentenentnahme zu erinnern und diese zu dokumentieren.

Die EP 1162480 A2 offenbart einen kontaktlosen Transponder für Verpackungen, die elektrisch leitende Folien beinhalten. Die Antenne des Transponders wird hierbei durch die elektrisch leitende Folie des Verpackungsmateriales selbst gebildet, in das Isoliergräben eingearbeitet sind, so dass eine wicklungsartige, räumliche Antenne vorhanden ist. Nachteil ist, dass bei einer Lagerung und einem Transport von zahlreichen Verpackungen, das Auslesen der im innern des Verpackungsstapels liegenden Transponder nicht möglich ist, da diese durch das elektrisch leitende Verpackungsmaterial der umgebenden Verpackungen abgeschirmt werden.

Aufgabe der vorliegenden Erfindung ist es daher, ausgehend vom gattungsgemäßen Stand der Technik, ein Verpackungsbehältnis mit Transponder und ein Identifikationsverfahren von insbesondere derartigen gestapelten Verpackungsbehältnissen so weiterzubilden, dass ein Aus- und ggf. Einlesen von Daten aus dem Transponder auch dann störungsfrei gewährleistet wird, wenn die Verpackungsbehältnisse innerhalb einer 2D/3D-Stapelmatrix gestapelt vorliegen, z.B. innerhalb einer die Verpackungsbehältnisse schützend und stützend umgebende Transport-/Lagerungsverpackung.

Die gestellte Aufgabe wird durch die Merkmale des Patentanspruchs 1, sowie des Patentanspruchs 12 gelöst.

Wesentlich dabei ist gemäß Patentanspruch 1, dass der Transponder mit mindestens einer weiteren Sende-/Empfangsantenne elektrisch leitend verbunden ist, und die Sende-/Empfangsantennen derart an/in dem Verpackungsbehältnis angeordnet sind, dass bei Stapelung einer Vielzahl derartiger Verpackungsbehältnisse innerhalb einer 2D- oder 3D-Stapelmatrix mit horizontalen Zeilen und vertikalen Spalten, sich mindestens je eine Sende-/Empfangsantenne benachbarter Verpackungsbehältnisse zur Datenübertragung und ggfs. Energieübertragung von Transponder zu Transponder innerhalb der horizontalen Zeilen und/oder der vertikalen Spalten und/oder diagonal zu diesen, gegenüberliegen.

Wesentlich dabei ist gemäß nebengeordnetem Patentanspruch 12, dass beim Auslesen das zu identifizierende Verpackungsbehältnis seine Identifizierungsdaten an das Lese-/Schreibgerät über eine Kette von Sende-/Empfangsantennen anderer Verpackungsbehältnisse sendet, welche zwischen dem zu identifizierenden Verpackungsbehältnis und dem Lese-/Schreibgerät liegen.

Vorteil dabei ist, dass es damit erstmals möglich ist, auch Daten aus Transpondern auszulesen, die sich auf Verpackungsbehältnissen innerhalb einer 2D- oder 3D-Stapelmatrix befinden, ohne dass dabei metallische Verpackungs- und/oder Produktbestandteile die Datenübertragung stören.

Dies wird dadurch erreicht, dass die Transponder der inneren Verpackungsbehältnisse im Innern der 2D- oder 3D-Stapelmatrix nicht direkt durch ein Auslesegerät ausgelesen werden, sondern über eine Kette von Transpondern, nämlich über die benachbarten Transponder der nach außen hin benachbarten Verpackungsbehältnisse und schließlich über die benachbarten Transponder der randseitigen Verpackungsbehältnisse. Es wird sozusagen eine Antennen-Kette gebildet und das Auslesen der innenliegenden Verpackungen dadurch erreicht, dass diese nicht direkt durch das Lesegerät ausgelesen werden, sondern die Daten über die Antennen der zwischenliegenden (zwischen Auslesegerät und auszulesender Verpackung liegenden) Verpackungen übertragen werden.

Vorteilhafte Weiterbildungen sind Gegenstand der Unteransprüche.

Hierbei ist die Außenform der Verpackungsbehältnisse unerheblich, jedoch wird aus Vereinfachungsgründen eine Quaderform mit rechteckigem oder quadratischem Querschnitt (auch Würfelform) bevorzugt. Es sind aber auch dreieckförmige, pentagonale und andere polygone Querschnittsformen als Prisma möglich. Auch sollen zylindrische Querschnittsformen mit kreisrundem, elliptischen oder ovalem Querschnitt und auch beliebige nicht-geometrische Freiformen von der vorliegenden Erfindung umfasst sein.

Hat die Quaderform des Verpackungsbehältnisses den bevorzugten rechteckigen oder quadratischen Querschnitt, dann sind die Transponder paarweise auf den sich diametral gegenüberliegenden Flächen angeordnet, also insbesondere 2, 4 oder 6 Stück. Wird eine übliche langgestreckte quaderförmige Blisterstreifen-Umverpackung mit rechteckigem Querschnitt eingesetzt, sind insbesondere aber aus Kostengründen nur 2 Stück Transponder auf den sich gegenüberliegenden langen Seitenflächen mit geringer Höhe vorgesehen.

Insbesondere werden die Antennen auf das Verpackungsbehältnis aufgedruckt (z.B. im Siebdruckverfahren) und der Transponder aufgeklebt. Hier soll die Erfindung jedoch frei bleiben, so dass die Antennen und der Transponder auch durch andere Verfahren mit dem Verpackungsbehältnis verbunden werden können, z.B. über ein Klebeetikett, auf dem sich alle RFID-Elemente, alle Antennen und der Transponder befinden. Auch können die RFID-Elemente im Laminierverfahren mit dem Verpackungsbehältnis verbunden werden, so dass sich alle RFID-Elemente auf einer Trägerschicht z.B. Kunststofffolie befinden und auf oder in das Material des Verpackungsbehältnisses auf-/einlaminiert werden.

In einer Weiterbildung der Erfindung ist der Transponder mit einem zusätzlichen Signalverstärker elektrisch leitend verbunden, um noch ein auslesbares Signal bei größeren Stapeln von Verpackungsbehältnissen am Auslesegerät zu erhalten. Dieser Signalverstärker kann sich innerhalb des Mikrochips des Transponders befinden, oder aber davon räumlich getrennt sein und z.B. sich auf dem gleichen Etikett befinden.

In den Transponderchip wird daher insbesondere ein Verstärkersystem eingebaut, welches in Zusammenhang mit dem Antennendesign die Eingangssignale an die umgebenden Verpackungen (Empfänger) weitergibt und damit die Metalleinlage der Blisterstreifen umgeht. Die Erfindung besteht insbesondere aus der Kombination zwischen einem 3D-Antennendesign, welches auf die Verpackung individuell abgestimmt wird, und einem Transponder mit integriertem Verstärker.

Die Erfindung ist aber nicht nur auf Verpackungsbehältnisse für mehrere Medikamenten-Blisterstreifen vorgesehen, sondern die Transponder können auch auf Verpackungsbehältnisse als Umverpackung für in metallisierte (insbesondere aluminiumbeschichtete) Folienbeutel befindliche Güter (z.B. Nahrungsmittel wie Kartoffelchips) verwendet werden.

Auch sind natürlich alle Arten von Transpondern für die Erfindung einsetzbar, nämlich zum einen passive Transponder, die ihre Energie extern von dem Auslesegerät beziehen, und zu anderen aktive Transponder, die eine eigene Energiequelle besitzen, als Einwegbatterie oder wiederaufladbarer Akku. Auch könnte eine einzige oder mehrere wenige (z.B. 5 oder 10 Stück) Energiequelle(n) für die Transponder des ganzen Stapels von z.B. 500 oder 1000 erfindungsgemäßen Verpackungsbehältnissen dienen.

Die Transponder können Nurlese-Speicher (read-only) und/oder Lese-/Schreib-Speicher (read/write) beinhalten, wobei die Lese-/Schreib-Speicher einmal oder mehrmals beschreibbar ausgestaltet sein können. Die Taktfrequenz der Transponder liegt wie üblich bei 125 KHz oder bei 13,56 MHz bei einer Reichweite von insbesondere nur wenigen Zentimetern (z.B. 1 cm).

Im Folgenden wird die Erfindung beispielhaft anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

### Es zeigt:

Figur 1: Erfindungsgemäßes quaderförmiges Verpackungsbehältnis mit Rechteckquerschnitt zur Aufnahme von mehreren alufolienversiegelten Blisterstreifen für Medikamententabletten;
Figur 2: 2D-Stapel einer Vielzahl von Verpackungsbehältnissen nach Figur 1 in einer Lager-/Transportverpackung;
Figur 3: Grundprinzip des Auslesens der Tansponder aus einem Stapel von Verpackungsbehältnissen z.B. nach Figur 2.

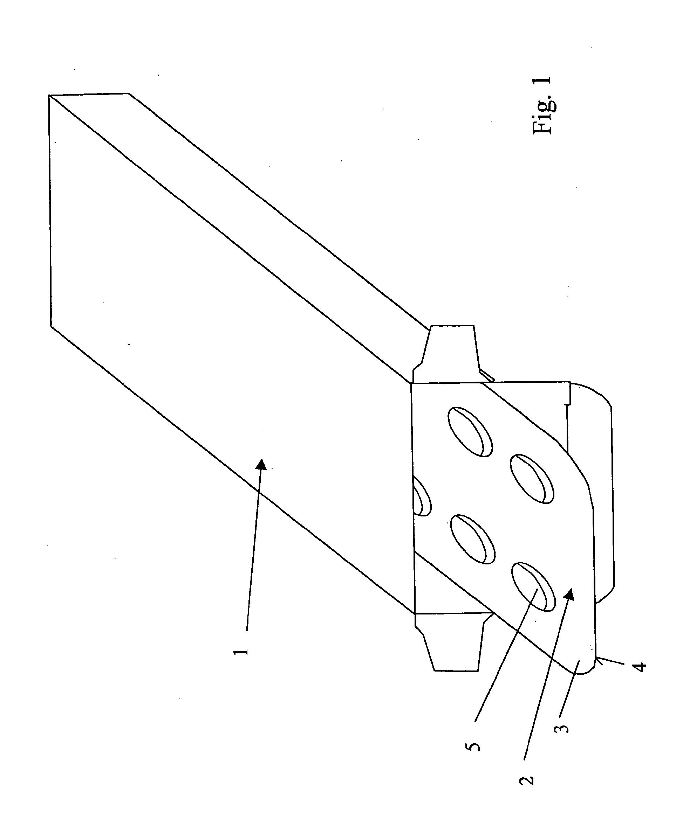

Figur 1 zeigt ein Verpackungsbehältnis 1 als Quader mit Recheckquerschnitt, in dessen Innenraum mehrere Blisterstreifen 2 aufgenommen sind, wobei hier aus Gründen der Übersichtlichkeit nur ein Blisterstreifen 2 dargestellt ist. Der Blisterstreifen 2 besteht aus einer oberen Kunststoffschicht 3, in die im Tiefziehverfahren oder Hohlblasverfahren eine Vielzahl kleiner Ausnehmungen für die Aufnahme von Medikamententabletten 5 eingebracht sind. Als abschließende und versiegelnde Unterseite ist auf der Kunststoffschicht 3 eine Aluminiumschicht 4 insbesondere thermisch aufgebracht (verschweißt oder aufgeklebt).

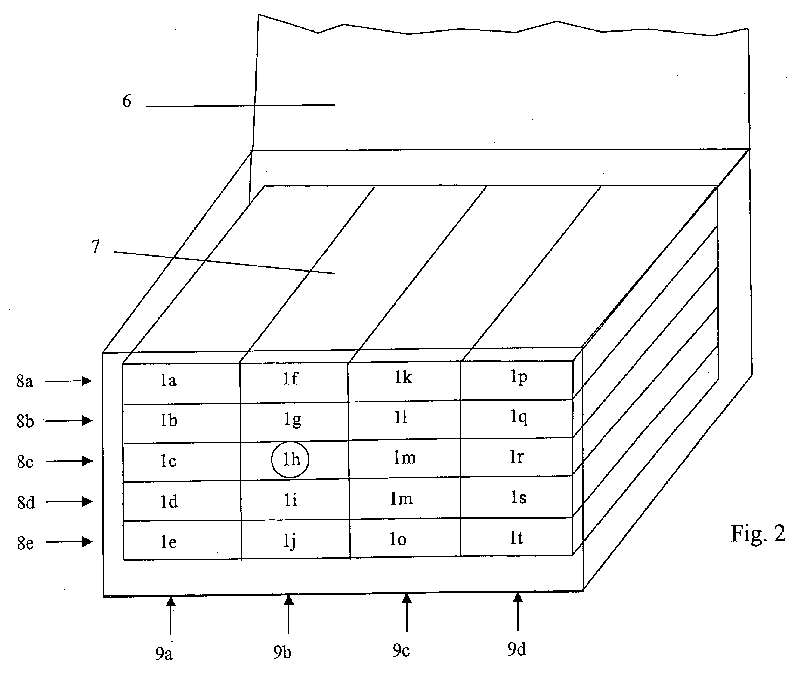

Figur 2 zeigt nun eine Anzahl von 20 Verpackungsbehältnissen 1a-1t gemäß Figur 1, die als 2D-Stapelmatrix 7 aufeinander und nebeneinander gestapelt sind und in einer Lager-/Transportverpackung 6 aufgenommen sind. Die 2D-Stapelmatrix 7 ist aus fünf Zeilen 8a-8e mal vier Spalten 9a-9d des Verpackungsbehältnisses 1 gebildet, also fünf Verpackungen hoch und vier Verpackungen breit. In anderen Ausführung kann noch die 3.Dimension der Tiefe hinzukommen, so dass eine 3D-Stapelmatrix von z.B. fünf (hoch) mal vier (breit) mal sechs (tief) aus 120 Stück Verpackungsbehältnissen 1 gebildet ist.

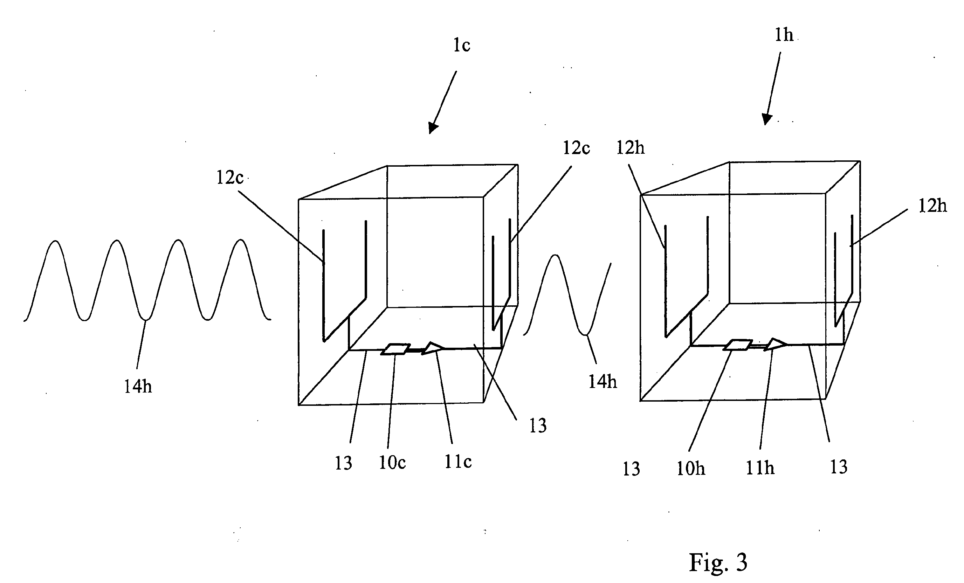

In Figur 3 sind nun beispielhaft die zwei Verpackungsbehältnisse 1c und 1h aus der 2D-Stapelmatrix 7 detailliert dargestellt.

Das Schreib-/Lesegerät (nicht dargestellt) kann nun für das Identifizieren (Auslesen oder Beschreiben) des Transponders 10 des Verpackungsbehältnisses 1 h (in Figur 2 eingekreist) entweder links in Zeile 8c in der Nähe des Verpackungsbehältnisses 1 c gemäß Figur 3 angelegt werden, oder aber rechts in Zeile 8c in der Nähe des Verpackungsbehältnisses 1 r (nicht gezeigt), oder aber oben/unten in Spalte 9b in der Nähe des Verpackungsbehältnisses 1f oder 1j (nicht gezeigt).

Am Boden der Verpackungsbehältnisse 1 c und 1 h sind die Transponder 10 etwa mittig angebracht, die mit dem direkt daneben befindlichen Signalverstärker 11 verbunden sind, der wiederum über Zuleitungen 13 auf dem Boden und den Seitenflächen der Verpackungsbehältnisse 1 c und 1 h mit den beiden U-förmigen Sende- und Empfangsantennen 12 verbunden sind, welche sich auf den beiden Seitenflächen der Verpackungsbehältnisse 1 c und 1 h befinden, sich gegenseitig diametral gegenüberliegend. Da sich die Sende- und Empfangsantennen 12 U-förmig in der Ebene der Seitenflächen der Verpackungsbehältnisse 1 c und 1 h befinden, bilden diese damit je eine zweidimensionale 2D-Antenne 12c oder 12h, zusammengenommen aber eine dreidimensionale 3D-Antennenanordnung 12c mit 12h.

Das Datensignal 14h (Identifizierungssignal des Verpackungsbehältnisses 1 h) wird aus dem Transponder 10h des Verpackungsbehältnis 1 h über den Verstärker 11h zu der linken Antenne 12h geleitet und dort über die Luftschnittstelle an die benachbarte rechte Antenne 12c des Verpackungsbehältnisses 1c übergeben, die das Datensignal 14h an den Verstärker 11 c und den Transponder 10c weitergibt, der das Datensignal 14h an die linke Antenne 12c leitet, welche über die Luftschnittstelle das Datensignal 14h an das Schreib-/Lesegerät (nicht gezeigt) übergibt. Im Schreib-/Lesegerät erfolgt dann eine Anzeige und/oder Speicherung der Identifikationsdaten 14h des Verpackungsbehältnisses 1 h.

In anderen Ausführungen, z.B. wenn die Verpackungsbehältnisse zylinderförmig sind, ist das Identifizieren auch z.B. des Verpackungsbehältnisses 1 h diagonal möglich, also z.B. über Verpackungsbehältnis 1 b oder 1 d, oder 1 p/1l oder 1 t/1n, insbesondere wenn die Zeilen 8 zueinander z.B. um eine halbe Breite der Verpackungsbehältnisse 1 seitlich versetzt übereinander gestapelt sind.

### Bezugszeichenliste

1. Verpackungsbehältnis; 1a-1t gestapelt in 6 als 7
2. Blisterstreifen
3. Kunststoffschicht
4. Aluminiumschicht
5. Tabletten
6. Lager-/Transportverpackung
7. 2D-Stapelmatrix von 1 mit 8 und 9
8. Zeilen von 7
9. Spalten von 7
10. Transponder
11. Verstärker für 14
12. Sende- und Empfangsantennen
13.Zuleitungen zwischen 10 und 12
14. Datensignal

## Patentansprüche

1. Verpackungsbehältnis (1) mit Transponder (10), zur Aufnahme von elektromagnetische Strahlung abschirmenden Gegenständen (2-5), und mit einer mit dem Transponder (10) elektrisch leitend verbundenen Sende- und Empfangsantenne (12) zur Datenübertragung und ggfs. auch zur Energieübertragung, **dadurch gekennzeichnet, dass** der Transponder (10) mit mindestens einer weiteren Sende-/Empfangsantenne (12) elektrisch leitend verbunden ist, und die Sende-/Empfangsantennen (12) derart an/in dem Verpackungsbehältnis (1) angeordnet sind, dass bei Stapelung einer Vielzahl derartiger Verpackungsbehältnisse (1) innerhalb einer 2D- oder 3D-Stapelmatrix (7) mit horizontalen Zeilen (8) und vertikalen Spalten (9), sich mindestens je eine Sende-/Empfangsantenne (12) benachbarter Verpackungsbehältnisse (1) zur Datenübertragung und ggfs. Energieübertragung von Transponder (10) zu Transponder (10) innerhalb der horizontalen Zeilen (8) und/oder der vertikalen Spalten (9) und/oder diagonal zu diesen, gegenüberliegen.

2. Verpackungsbehältnis nach Anspruch 1, **dadurch gekennzeichnet, dass** der Transponder (10) mit einem zusätzlichen Signalverstärker (11) elektrisch leitend verbunden ist.

3. Verpackungsbehältnis nach Anspruch 2, **dadurch gekennzeichnet, dass** der Transponder (10) und der zusätzliche Signalverstärker (11) in einem gemeinsamen Bauteil, insbesondere einem IC-Chip vorliegen.

4. Verpackungsbehältnis nach einem der Ansprüche 1-3, **dadurch gekennzeichnet, dass** die mindestens zwei Sende-/Empfangsantennen (12) U-förmig ausgebildet sind und je eine zweidimensionale 2D-Antenne bilden.

5. Verpackungsbehältnis nach Anspruch 4, **dadurch gekennzeichnet, dass** die 2D-Antennen (12) zusammen mit ihren Zuleitungen (13) auf dem Verpackungsbehältnis (1) eine dreidimensionale 3D-Antenne bilden.

6. Verpackungsbehältnis nach einem der Ansprüche 1-5, **dadurch gekennzeichnet, dass** das Verpackungsbehältnis (1) ein Quader mit rechteckigem oder quadratischem Querschnitt ist, oder aber ein Prisma mit dreieckförmiger, pentagonaler oder anderer polygoner Querschnittsform ist oder aber ein Zylinder mit kreisförmiger, elliptischer oder ovaler Querschnittsform ist.

7. Verpackungsbehältnis nach Anspruch 6, **dadurch gekennzeichnet, dass** mindestens zwei Sende-/Empfangsantennen (12) paarweise auf sich diametral gegenüberliegenden Flächen des Verpackungsbehältnisses (1) angeordnet sind.

8. Verpackungsbehältnis nach Anspruch 7, **dadurch gekennzeichnet, dass** das Verpackungsbehältnis (1) ein Quader mit rechteckigem Querschnitt ist und die Sende-/Empfangsantennen (12) auf den zwei sich gegenüberliegenden langen Seitenflächen geringerer Höhe des Verpackungsbehältnisses (1) vorgesehen sind.

9. Verpackungsbehältnis nach einem der Ansprüche 2-8, **dadurch gekennzeichnet, dass** die Sende-/Empfangsantennen (12) auf das Verpackungsbehältnis (1) aufgedruckt und der Transponder (10), sowie der zusätzliche Signalverstärker (11) dort aufgeklebt sind.

10. Verpackungsbehältnis nach einem der Ansprüche 2-8, **dadurch gekennzeichnet, dass** die Sende-/Empfangsantennen (12), der Transponder (10), sowie der zusätzliche Signalverstärker (11) sich auf einem Etikett befinden, welches auf das Verpackungsbehältnis (1) aufgebracht, insbesondere aufgeklebt ist.

11. Verwendung des Verpackungsbehältnisses nach einem der Ansprüche 1-10, **dadurch gekennzeichnet, dass** das Verpackungsbehältnis (1) zur Aufnahme von mit Metallfolie versiegelten und mit Medikamenten (5) bestückten Kunststoffblisterstreifen (2-4) vorgesehen ist, oder aber zur Aufnahme von in metallisierten, insbesondere aluminiumbeschichteten, Folienbeuteln befindlichen Gütern, z.B. Nahrungsmittel wie Kartoffelchips.

12. Verfahren zum Identifizieren, d.h. zum Auslesen/Einschreiben von Identifizierungsdaten mittels eines mit elektromagnetischer Strahlung arbeitendenden kontaktlosen Lese-/Schreibgerätes, von in einem 2D/3D-Matrixstapel (7) einer Vielzahl von Verpackungsbehältnissen (1) befindlichen einzelnen Verpackungsbehältnis (1a-1t), beinhaltend mindestens einen Transponder (10) mit mindestens einer Sende-/Empfangsantenne (12), **dadurch gekennzeichnet, dass** beim Auslesen das zu identifizierende Verpackungsbehältnis (1a-1t) seine Identifizierungsdaten an das Lese-/Schreibgerät über eine Kette von Sende-/Empfangsantennen (12a-12t) anderer Verpackungsbehältnisse (1 a-1 t) sendet, welche zwischen dem zu identifizierenden Verpackungsbehältnis (1a-1t) und dem Lese-/Schreibgerät liegen.

13. Verfahren nach Anspruch 12, **dadurch gekennzeichnet, dass** das Lesegerät aus dem 2D/3D-Matrixstapel von Verpackungsbehältnissen (1) spalten- (9) und/oder zeilenweise (8) und/oder diagonal das zu identifizierende Verpackungsbehältnis (1a-1t) ausliest.

14. Verfahren nach Anspruch 12 oder 13, **dadurch gekennzeichnet, dass** auch das Einschreiben von Daten in ein innerhalb des 2D/3D-Matrixstapels befindliches zu codierendes/markierendes Verpackungsbehältnis (1a-1t) über eine Kette von Sende-/Empfangsantennen (12a-12t) von anderen Verpackungsbehältnissen (1a-1t) erfolgt.

15. Verfahren nach einem der Ansprüche 12-14, **dadurch gekennzeichnet, dass** das zu identifizierende bzw. zu codierende/markierende Verpackungsbehältnis (1a-1t) im innern des Stapels, insbesondere des 2D/3D-Matrixstapels liegt, und nicht randseitig.

16. Verfahren nach einem der Ansprüche 12-15, **dadurch gekennzeichnet, dass** ein Verpackungsbehältnis (1) gemäß den Ansprüchen 1-11 verwendet wird.
